Europäisches Patentamt

European Patent Office

Office européen des brevets

(11) Publication number: **0 353 734**
**A2**

# EUROPEAN PATENT APPLICATION

(21) Application number: 89114269.7

(22) Date of filing: 02.08.89

(51) Int. Cl.4: **C08L 63/00** , **C08L 57/04** , **C08G 59/62**

(30) Priority: 04.08.88 JP 196391/88

(43) Date of publication of application:
**07.02.90 Bulletin 90/06**

(84) Designated Contracting States:
**DE FR GB SE**

(71) Applicant: NIPPON PAINT CO., LTD.
2-1-2, Oyodokita Kita-ku
Osaka-shi Osaka-fu(JP)

(72) Inventor: Okude, Yoshitaka
23-14, Nagisaminamimachi
Hirakata-shi Osaka(JP)
Inventor: Miwa, Hiroshi
753-8, Azatatsumikakiuchi Minamino
Itami-shi Hyogo(JP)
Inventor: Mizuguchi, Katsumi
2-26-2, Tamakushi
Ibaragi-shi Osaka(JP)

(74) Representative: Hansen, Bernd, Dr.rer.nat. et al
Hoffmann, Eitle & Partner Patentanwälte
Arabellastrasse 4 Postfach 81 04 20
D-8000 München 81(DE)

(54) Thermosetting composition.

(57) Disclosed is a thermosetting composition which can formulate one package and also keeps the above mentioned properties. The thermosetting composition of the present invention comprises (a) a copolymer of a monomer having a polymerizable unsaturated group and an acid anhydride group and a copolymerizable monomer, of which said acid anhydride group is substantially completely half-esterified, half-thioesterified and/or half-amidated, (b) a hydroxy compound having a hydroxy value of 30 to 1,000, and (c) an epoxy compound having an epoxy value of 50 to 1,000.

EP 0 353 734 A2

# THERMOSETTING COMPOSITION

## FIELD OF THE INVENTION

The present invention relates to a thermosetting composition. More particularly, it relates to a high solid thermosetting composition which is suitable for coating automobiles or coils.

## BACKGROUND OF THE INVENTION

Japanese Kokai Publication (unexamined) 84674/1988 discloses a high solid thermosetting composition which comprises a low molecular weight polyepoxide, a low molecular weight hydroxyl-group containing polyfunctional material, a curing agent of an acid anhydride and a curing catalyst. The composition provides a paint containing a small amount of an organic solvent and the coated film therefrom has improved adhesion properties, gloss and definition.

The composition, however, has high reactivity and therefore is difficult to formulate one package, thus workability being poor.

## SUMMARY OF THE INVENTION

The present invention provides a thermosetting composition which can formulate one package and also keeps the above mentioned properties. The thermosetting composition of the present invention comprises (a) a copolymer of a monomer having a polymerizable unsaturated group and an acid anhydride group and a copolymerizable monomer, of which said acid anhydride group is substantially completely half-esterified, half-thioesterified and/or half-amidated, (b) a hydroxy compound having a hydroxy value of 30 to 1,000, and (c) an epoxy compound having an epoxy value of 50 to 1,000.

## DETAILED DESCRIPTION OF THE INVENTION

The monomer having a polymerizable unsaturated group and an acid anhydride group for the copolymer (a) includes itaconic anhydride, maleic anhydride and the like. The copolymerizable monomer for the copolymer (a) includes styrene, alpha-methylstyrene, an acrylate (e.g. methyl acrylate, ethyl acrylate, butyl acrylate and 2-ethylhexyl acrylate), a methacrylate (e.g. methyl methacrylate, ethyl methacrylate, butyl methacrylate, isobutyl methacrylate, t-butyl methacrylate, 2-ethylhexyl methacrylate and lauryl methacrylate), acrylamide, methacrylamide and the like. Polymerization can be conducted by an art known method, such as radical polymerization etc. The copolymer preferably has a number average molecular weight of 500 to 40,000, more preferably 1,000 to 20,000. If the number average molecular weight is more than 40,000, the copolymer has high viscosity and is difficult to formulate a high solid composition. Molecular weights of less than 500 deteriorate curing ability. The molecular weight herein is determined by a gel permeation chromatography (GPC) method. The copolymer (a) preferably has at least two acid anhydride groups, more preferably 2 to 5 groups. If the number of the acid anhydride group is less than two, the curing properties of the composition are insufficient.

The half-esterification, half-thioesterification and half-amidation may be carried out after forming the copolymer (a). Also, the monomer having an unsaturated group and an acid anhydride group may be preliminary reacted with a compound having an active hydrogen and then copolymerized with the copolymerizable monomer. In the latter case, a monomer having a hydroxyl group, such as 2-hydroxyethyl methacrylate and 2-hydroxyethyl acrylate, can also be employed as the copolymerizable monomer, because the acid anhydride group is blocked by the modification.

A half-esterifying agent includes a low molecular weight alcohol, such as methanol, ethanol, i-propanol, t-butanol, i-butanol, methyl cellosolve, ethyl cellosolve, dimethylamino ethanol, diethylamino ethanol, acetol and the like. A half-thioesterifying agent includes a low molecular weight mercaptan, such as ethyl mercaptan, propyl mercaptan, butyl mercaptan and the like. A half-amidation agent includes a low molecular weight amine, such as ethylamine, butylamine, aniline and the like. A half-esterified compound and a half-amidated compound are preferred, because a half-thioesterified compound has bad smell. More preferred agents are t-butanol, dimethylamino ethanol, diethylamino ethanol, acetol and aniline. The reaction of the half-esterification, half-thioesterification and half- amidation can be carried out by a conventional method, for example at a temperature of room temperature to 120 °C, optionally in the presence of a tirtiary amine as catalyst.

The hydroxyl compound (b) of the present invention can be any type compound, preferably a compound having at least two hydroxyl groups. Typical examples of the hydroxy compounds (b) are a low molecular weight compound, such as 1,5-pentanediol, 1,6-hexanediol, neopentyl glycol, trimethylolpropane, trimethylolethane, pentaerythritol, dipentaerythritol, triethylene glycol, triethanolamine, tripropanolamine and the like; a high molecular weight compound, such as acrylpolyol, polyesterpolyol, polyetherpolyol, polyurethanepolyol; and a mixture thereof. The hydroxy compound (b) preferably has a hydroxy value of 30 to 1,000, more preferably 40 to 500. Hydroxy values less than 30 deteriorate the water resistance of the cured film. Hydroxy values more than 1,000 are difficult to formulate high solid.

An equivalent ratio of the modified (half-esterified, half-thioesterified or half-amidated) acid anhydride group in the copolymer (a) to the hydroxyl group in the hydroxy compound (b) is about 0.3 to 10 : 1, preferably 0.5 to 5 : 1. If the ratio is less than 0.3, curing characteristics are poor. If the ratio is more than 10, the water resistance of the cured film is poor.

The epoxy compound (c) is a compound having an epoxy group, for example, an alicyclic epoxy resin available from Union Carbide Corp. as ERL 4234, ERL 4299, ERL 4221 and ERL 4206; a glycidyl ester, such as diglycidyl phthalate, diglycidyl tetrahydrophthalate, diglycidyl hexahydrophthalate, dimethylglycidyl phthalate, dimethylglycidyl hexahydrophthalate, dimer acid glycidyl ester, aromatic glycidyl ester and the like; a glycidyl ether, such as glycerol triglycidyl ether, trimethylpropane triglycidyl ether, diglycerol triglycidyl ether, sorbitol polyglycidyl ether, and the like; a glycidyl group containing acryl polymer, such as a copolymer of a glycidyl monomer and a copolymerizable monomer as mentioned above. Preferred are the glycidyl ester, the glycidyl ether and the glycidyl group containing acryl polymer.

An equivalent ratio of the oxirane group of the epoxy compound (c) to the modified acid anhydride group of the copolymer (a) is 0.3 to 5 : 1, preferably 0.5 to 2 : 1. If the ratio is less than 0.3, the water resistance of the cured film is poor. If it is more than 5, unreacted oxirane groups remain and deteriorate resistance to chemicals.

The thermosetting composition of the present invention contains the above mentioned three components (a), (b) and (c) and is very suitable for molding and coating. Coating applications are very preferred, because the composition is curable at a relatively low temperature.

In case of the coating applications, the curable composition of the present invention may be formulated a clear paint or be mixed with a pigment to form an enamel paint. Preferably, where the polymer is modified with dimethylaminoethanol to form both an acid group and an amino group, the polymer is made amphoteric and has excellent pigment dispersibility. The pigment can be any conventional one, for example, iron oxide, lead oxide, strontium chromate, carbon black, coal dust, titanium oxide, talc, barium sulfate, cadmium yellow, cadmium red, chromium yellow, a metal pigment (such as aluminum flake, pearl mica), an organic pigment (such as phtharocyanine blue, Cinquacia red) and the like. The pigment content in the paint is usually expressed as a weight ratio of pigment / nonvolatile content of the coating composition. In one embodiment of the present invention, the weight ratio can be as high as 2 : 1, typically is between 0.05 to 1 : 1.

The coating composition of the thermosetting composition may generally contain a liquid diluent. The liquid diluent is a solvent or nonsolvent which is removed after applying and which reduces the viscosity so that it is coated in a controlled thickness by a general coating method, such as spray coating and the like. The liquid diluent also assists wetting properties of a substrate, miscibility, package stability, coalescent properties and film-forming properties. Suitable examples of the diluents are an aromatic hydrocarbon, such as toluene and xylene; a ketone, such as methyl ethyl ketone and methyl isobutyl ketone; an secondary or tertiary alcohol, such as isopropyl alcohol and sec-butyl alcohol; a monoether of glycol, such as ethyleneglycol monoether and diethyleneglycol monoether; a monoether glycol acetate, such as 2-ethoxyethyl acetate; and a suitable mixture thereof. the diluent may be present in the coating composition in an amount of up to 60 % by weight, generally 20 to 55 % by weight based on the total amount of the diluent and the nonvolatile content of the coating composition.

Since the modified copolymer has free carboxyl groups, water can be used as a diluent if the carboxyl groups are neutralized with an amine.

Beside the above components, an additive, such as filler, a plasticizer, an antioxidation agent, a ultraviolet absorber, a flow controlling agent, a surfactant and the like can be added, if desirable. An amount of the additive is varied widely, generally up to 10 % by weight based on the nonvolatile content of the coating composition.

The coating composition may be applied on a substrate by spray coating, blushing, dipping, roll coating, flow coating and the like. The substrate to be employed includes wood, metal, glass, fablic, plastics, foam or various primer-coated substrate. The coating composition is very suitable for plastics or metal, such as steel and aluminum. A thickness of film can be varied, but generally is 0.5 to 3 mil. After the coating composition has been applied, it is cured. Curing can be carried out, especially 130 to 200 °C, preferably 140 to 180 °C to obtain a highly crosslinked film. The time for curing is varied by the curing temperature, but is generally at 140 to 180 °C for 10 to 30 minutes.

According to the present invention, since a copolymer of which acid anhydride groups are modified (half-esterified, half-thioesterified or half-amidated) is employed, a reaction between the acid anhydride group and an active containing compound does not occur and the composition can be formulated one-package. If the acid anhydride groups are not modified, they are easily reacted with an active hydrogen-containing compound at room temperature and therefore impossible to formulate one-packed composition. The curing rate of the composition can be varied by the modifier of the acid anhydride groups. The composition can also be made water-borne and remove environmental pollution because of organic solvent. The cured film from the composition can be controlled between soft and hard by the molecular weight of polymers, glass transition temperature, the modifier of the acid anhydride groups, curing agents and the like. The cured film is excellent in chemical resistance, weather resistance, adhesive properties and the like.

### Examples

The present invention is illustrated by the following examples, which, however, are not to be construed as limiting the present invention to their details. All parts and percentage in the examples are by weight unless otherwise specified.

### Production Example 1

#### Synthesys of copolymer A-I containing carboxyl anhydride groups

A one liter reaction vessel equipped with a thermometer, an agitator, a condenser and a nitrogen inlet was charged with 120 parts of butyl acetate and heated to 115 °C. A solution containing 21 parts of n-butyl acrylate, 95 parts of n-butyl methacrylate, 34 parts of 2-ethylhexyl methacrylate, 45 parts of itaconic anhydride, 60 parts of dioxane and 10 parts of t-butylperoxy hexanoate was added dropwise over 3 hours and further mixed for 2 hours to obtain an acryl resin having a nonvolatile content of 53 % and a number average molecular weight of 5,500.

### Production Example 2 to 5

#### Synthesys of polymers A-II to V containing carboxyl anhydride groups

Copolymers containing carboxyl anhydride groups were obtained as generally described in Production Example 1 but using the components shown in Table 1.

Table 1

| Production examples number | 2 | 3 | 4 | 5 |
|---|---|---|---|---|
| Polymer number | A-II | A-III | A-IV | A-V |
| Butyl acetate | 100 | 120 | 100 | 100 |
| Xylene | 20 | - | 20 | - |
| Butylene | 10 | - | 50 | - |
| Methyl methacrylate | - | 30 | 35 | - |
| Butyl acrylate | 80 | 30 | 30 | 80 |
| 2-Ethylhexyl methacrylate | 45 | 60 | 15 | 45 |
| Ethyl methacrylate | 15 | - | - | - |
| Ethyl acrylate | - | 45 | 25 | 15 |
| Itaconic anhydride | 45 | 30 | 40 | 25 |
| Dioxane | 50 | 50 | 50 | 70 |
| Kayer-O* | 7 | 10 | - | - |
| AIBN** | - | - | 8 | 2 |
| Nonvolatile content | 52 | 53 | 52 | 48 |
| Number-average molecular weight | 7,000 | 5,000 | 4,000 | 12,000 |

* Kayer-O; t-Buthyl-peroxy-2-ethyl hexanoate

** AIBN ; azobisisobutyronitrile

## Production Example 6

A mixture of 35 parts of butyl acetate and 35.8 parts of dimethylaminoethanol wad added to 385 parts of the copolymer A-I of Production Example 1 and reacted at 40 °C for 12 hours to form a copolymer A-VI. It was identified by IR that the absorption at 1,785 $cm^{-1}$ of the acid anhydride groups disappeared.

## Production Examples 7 to 12

As generally described in Production Example 6, the ingredients in Table 2 were employed to modify the copolymers A-I to V. It was identified by IR that the absorption at 1,785 $cm^{-1}$ of the acid anhydride groups disappeared.

Table 2

| Production Examples | 7 | 8 | 9 | 10 | 11 | 12 |
|---|---|---|---|---|---|---|
| Resultant polymer No. | Polymer VII | Polymer VIII | Polymer IX | Polymer X | Polymer XI | Polymer XII |
| Polymer to be modified and amount (parts) | Polymer I 385 | Polymer I 385 | Polymer II 372 | Polymer III 375 | Polymer IV 373 | Polymer V 337 |
| Modifier and amount (parts) | Acetol 30 | Aniline 37 | Acetol 30 | Diethylamine 20 | Morpholine 31.5 | Butylmercaptan 20 |
| Trietylamine (parts) | 3 | - | 3 | - | - | 3 |

5

Example 1

A clear paint was prepared by mixing the following ingredients.

| Ingredients | Parts |
|---|---|
| Varnish of Production Ex. 7 | 100 |
| Triethanolamine | 0.5 |
| Trimethylolpropane glycidyl ether | 10.5 |
| Tinuvin 900 [1] | 1.2 |
| Tinuvin 440 [2] | 0.6 |

[1] UV absorber available from Ciba-Geigy Company.
[2] Anti-oxident available from Ciba-Geigy Company.

The obtained clear paint was diluted by a thinner of butyl acetate and xylene (1 1) to a paint viscosity. A phosphate treated steel panel was coated with Power Top U-30 and Orga P-2 (both available from Nippon Paint Co., Ltd.). Next, the panel was coated with a metallic base paint (available from Nippon Paint Co., Ltd. as Super Lack H-90) and then the above prepared clear paint was coated thereon by wet-on-wet coating and cured at 140 °C for 30 minutes. The coated film was evaluated and the results are shown in Table 3.

Example 2

A clear paint was prepared by mixing the following ingredients.

| Ingredients | Parts |
|---|---|
| Varnish of Production Ex. 7 | 100 |
| Acrylpolyol[3] | 10 |
| Trimethylolpropane glycidyl ether | 10.5 |
| Tinuvin 900 | 1.2 |
| Tinuvin 292 [4] | 0.6 |

[3] A solution containing 30 parts of styrene, 30 parts of hydroxyethyl methacrylate, 40 parts of n-butyl acrylate and 8 parts of t-butylperoxy-2-ethylhexanoate was added dropwise at 125 °C for 3 hours to a mixture of 50 parts of xylene and 50 parts of butyl acetate. Then, 2 parts of t-butylperoxy-2-ethylhexanoate and 5 parts of butyl acetate were added for 30 minutes and held at 125 °C for 2 hours to obtain an acrylpolyol having an OH value (solid) of 433 and a nonvolatile content of 50 %.

[4] Anti-oxidnet available form Ciba-Geigy Company.

The obtained clear paint was diluted by a thinner of butyl acetate and xylene (1/1) to a paint viscosity. A phosphate treated steel panel was coated with Power Top U-30 and Orga P-2 (both available from Nippon Paint Co., Ltd.). Next, the panel was coated with a metallic base paint (available from Nippon Paint Co., Ltd.

as Super Lack H-90) and then the above prepared clear paint was coated thereon by wet-on-wet coating and cured at 140 °C for 30 minutes. The coated film was evaluated and the results are shown in Table 3.

Example 3

A clear paint was prepared by mixing the following ingredients.

| Ingredients | Parts |
|---|---|
| Varnish of Production Ex. 8 | 100 |
| Acrylpolyol of Example 2 | 15 |
| Glycerol triglycidyl ether | 13 |
| Tinuvin 900 | 1.2 |
| Tinuvin 292 | 0.6 |

The obtained clear paint was diluted by a thinner of butyl acetate and xylene (1 1) to a paint viscosity. A phosphate treated steel panel was coated with Power Top U-30 and Orga P-2 (both available from Nippon Paint Co., Ltd.). Next, the panel was coated with a metallic base paint (available from Nippon Paint Co., Ltd. as Super Lack H-90) and then the above prepared clear paint was coated thereon by wet-on-wet coating and cured at 140 °C for 30 minutes. The coated film was evaluated and the results are shown in Table 3.

Example 4

A clear paint was prepared by mixing the following ingredients.

| Ingredients | Parts |
|---|---|
| Varnish of Production Ex. 9 | 100 |
| Acryl varnish containing glycidyl groups[5] | 75 |
| Triethanolamine | 1 |
| Tinuvin 900 | 1.2 |
| Tinuvin 292 | 0.6 |

[5] A solution containing 40 parts of glycidyl methacrylate, 30 parts of styrene, 30 parts of n-butyl acrylate and 7 parts of t-butylperoxy-2-ethylhexanoate was added dropwise at 125 °C for 3 hours to a mixture of 50 parts of xylene and 50 parts of butyl acetate. Then, 2 parts of t-butylperoxy-2-ethylhexanoate and 5 parts of butyl acetate were added for 30 minutes and held at 125 °C for 2 hours to obtain a glycidyl group-containing acryl varnish having an OH value (solid) of 355 and a nonvolatile content of 50 %.

The obtained clear paint was diluted by a thinner of butyl acetate and xylene (1·1) to a paint viscosity. A phosphate treated steel panel was coated with Power Top U-30 and Orga P-2 (both available from Nippon Paint Co., Ltd.). Next, the panel was coated with a metallic base paint (available from Nippon Paint Co., Ltd.

as Super Lack H-90) and then the above prepared clear paint was coated thereon by wet-on-wet coating and cured at 140 °C for 30 minutes. The coated film was evaluated and the results are shown in Table 3.

Example 5

A clear paint was prepared by mixing the following ingredients.

| Ingredients | Parts |
|---|---|
| Varnish of Production Ex. 10 | 100 |
| Triethanolamine | 0.4 |
| ERL 4221[6] | 7 |
| Tinuvin 900 | 1.2 |
| Tinuvin 292 | 0.6 |

[6] Alicyclic epoxy resin available from Union Carbide Corp.

The obtained clear paint was diluted by a thinner of butyl acetate and xylene (1 1) to a paint viscosity. A phosphate treated steel panel was coated with Power Top U-30 and Orga P-2 (both available from Nippon Paint Co., Ltd.). Next, the panel was coated with a metallic base paint (available from Nippon Paint Co., Ltd. as Super Lack H-90) and then the above prepared clear paint was coated thereon by wet-on-wet coating and cured at 140 °C for 30 minutes. The coated film was evaluated and the results are shown in Table 3.

Example 6

A clear paint was prepared by mixing the following ingredients.

| Ingredients | Parts |
|---|---|
| Varnish of Production Ex. 11 | 100 |
| Pentaerythritol | 4 |
| Acryl varnish containing glycidyl groups of Example 4 | 60 |
| Tinuvin 900 | 1.2 |
| Tinuvin 292 | 0.6 |

The obtained clear paint was diluted by a thinner of butyl acetate and xylene (1 1) to a paint viscosity. A phosphate treated steel panel was coated with Power Top U-30 and Orga P-2 (both available from Nippon Paint Co., Ltd.). Next, the panel was coated with a metallic base paint (available from Nippon Paint Co., Ltd. as Super Lack H-90) and then the above prepared clear paint was coated thereon by wet-on-wet coating and cured at 140 °C for 30 minutes. The coated film was evaluated and the results are shown in Table 3.

Example 7

A clear paint was prepared by mixing the following ingredients.

8

| Ingredients | Parts |
|---|---|
| Varnish of Production Ex. 11 | 100 |
| Triethanolamine | 1 |
| Diglycidyl tetrahydrophthalate÷ | 6 |
| Tinuvin 900 | 1.2 |
| Tinuvin 292 | 0.6 |

The obtained clear paint was diluted by a thinner of butyl acetate and xylene (1:1) to a paint viscosity. A phosphate treated steel panel was coated with Power Top U-30 and Orga P-2 (both available from Nippon Paint Co., Ltd.). Next, the panel was coated with a metallic base paint (available from Nippon Paint Co., Ltd. as Super Lack H-90) and then the above prepared clear paint was coated thereon by wet-on-wet coating and cured at 140 °C for 30 minutes. The coated film was evaluated and the results are shown in Table 3.

Table 3

| Examples | 1 | 2 | 3 | 4 | 5 | 6 | 7 |
|---|---|---|---|---|---|---|---|
| Paint stability (40 °C x 1 week) | No defects | No defects | No defects | No defects | No defects | No defects | No defects |
| Pencil hardness | H | F | F | F | HB | HB | F |
| Xylene rubbing | No defects | No defects | No defects | No defects | Small scratch | Small scratch | No defects |
| Resistance to warm water (40 °C x 10 days) | No defects | No defects | No defects | No defects | Slightly mutted | Slightly mutted | No defects |
| Resistance to NaOH (0.1N, NaOH spot) | No defects | No defects | No defects | No defects | No defects | No defects | No defects |
| Appearance | Good | Good | Good | Good | Good | Good | Good |

## Claims

1. A thermosetting composition comprising;

(a) a copolymer of a monomer having a polymerizable unsaturated group and an acid anhydride group and a copolymerizable monomer, of which said acid anhydride group is substantially completely half-esterified, half-thioesterified and/or half-amidated,

(b) a hydroxy compound having a hydroxy value of 30 to 1,000, and

(c) an epoxy compound having an epoxy value of 50 to 1,000.

2. The thermosetting composition according to Claim 1 wherein said monomer having a polymerizable unsaturated group and an acid anhydride group is itaconic anhydride or maleic anhydride.

3. The thermosetting composition according to Claim 1 wherein said copolymerizable monomer is styrene alpha-methylstyrene, methyl acrylate, ethyl acrylate, butyl acrylate, 2-ethylhexyl acrylate, methyl methacrylate, ethyl methacrylate, butyl methacrylate, isobutyl methacrylate, t-butyl methacrylate, 2-ethylhexyl methacrylate, lauryl methacrylate, acrylamide or methacrylamide.

4. The thermosetting composition according to Claim 1 wherein said copolymer (a) has a number average molecular weight of 500 to 40,000.

5. The thermosetting composition according to Claim 1 wherein said copolymer (a) has at least two acid anhydride groups.

6. The thermosetting composition according to Claim 1 wherein said hydroxyl compound (b) is a compound having at least two hydroxyl groups.

7. The thermosetting composition according to Claim 1 wherein said hydroxy compounds (b) are 1,5-

9

pentanediol, 1,6-hexanediol, neopentyl glycol, trimethylolpropane, trimethylolethane, pentaerythritol, dipentaerythritol, triethylene glycol, triethanolamine, tripropanolamine, acrylpolyol, polyesterpolyol, polyetherpolyol, polyurethanepolyol or a mixture thereof.

8. The thermosetting composition according to Claim 1 wherein said hydroxy compound (b) has a hydroxy value of 30 to 1,000.

9. The thermosetting composition according to Claim 1 wherein the equivalent ratio of the modified (half-esterified, half-thioesterified or half-amidated) acid anhydride group in the copolymer (a) to the hydroxyl group in the hydroxy compound (b) is about 0.3 to 10 : 1.

10. The thermosetting composition according to Claim 1 wherein said epoxy compound (c) is diglycidyl phthalate, diglycidyl tetrahydrophthalate, diglycidyl hexahydrophthalate, dimethylglycidyl phthalate, dimethylglycidyl hexahydrophthalate, dimer acid glycidyl ester, aromatic glycidyl ester, glycerol triglycidyl ether, trimethylpropane triglycidyl ether, diglycerol triglycidyl ether, sorbitol polyglycidyl ether or a copolymer of a glycidyl monomer and a copolymerizable monomer as mentioned above.

11. The thermosetting composition according to Claim 1 wherein said equivalent ratio of the oxirane group of the epoxy compound (c) to the modified acid anhydride group of the copolymer (a) is 0.3 to 5 : 1.